# EUROPEAN PATENT SPECIFICATION

(11) **EP 0 349 923 B1**
(45) Date of publication and mention of the grant of the patent: **01.09.1993**
(21) Application number: 89111970.3
(22) Date of filing: 30.06.1989
(51) Int. Cl.: H02P 5/418

(54) **A control means for a universal electric motor**
Regelvorrichtung für einen Universalmotor
Appareil de régulation pour un moteur universel électrique

(30) Priority: 07.07.1988 IT 4574288 U
(43) Date of publication of application: 10.01.1990
(73) Proprietor: INDUSTRIE ZANUSSI S.p.A., I-33170 Pordenone (IT)
(72) Inventor: Nodassi, Francesco, I-33080 Porcia (Pordenone) (IT)
(74) Representative: Herrmann-Trentepohl, Werner, Dipl.-Ing.

(56) References cited:
- DE-A- 2 950 092
- DE-A- 3 119 794
- ELEKTRONIK. vol. 35, no. 14, July 1986, MUNCHEN DE pages 73 - 78; H. SAX ET AL: "MIKROCOMPUTER MIT SENSOR- UND AKTUATOR-INTERFACE"

## Description

The present invention relates to a control means for a universal electric motor.

As is known, a universal motor is a commutator motor with serial excitation whose rotating speed can be regulated for example by modulating the supply voltage of the motor by means of a control or driving circuit of the phase splitting type, the pulse-width modulation type, or the like.

Normally, the rotor of a universal motor is associated with a speed transducer (for example a tachometric generator) adapted to drive the control circuit with a signal proportional to the effective rotating speed of the motor; the control circuit compares the signal with a corresponding reference signal and controls the power supply to the motor proportionally to the error signal resulting from this comparison in order to keep the desired working speed substantially constant.

In particular, the power section of the control circuit normally consists of a controlled switch (e.g. a triac) connected in series to the motor and to the electrical power supply.

Consequently, a short-circuit of the controlled switch involves the application of the total supply voltage at the heads of the motor, which tends to rotate at an extremely high speed, thereby damaging the apparatus in which it is mounted. This phenomenon is further accentuated when the universal motor is used, for example, to drive the rotating drum of a washing machine which is also provided with an inverter means adapted to invert the direction of rotation of the motor alternatingly.

To remedy this disadvantage it has been proposed to connect in series to the motor a fuse suitably calibrated to break the electric supply circuit when the current exceeds a predetermined safety value. This solution is unsatisfactory, however, since the fuse readily deteriorates in the course of time, even in states of correct function, and thus tends to interrupt the supply circuit of the motor inappropriately.

Alternatively, it has also been proposed to connect in series to the motor an electric safety switch that is normally closed and adapted to open to switch off the motor when the total supply voltage is applied to the latter.

The safety switch may be a centrifugal switch adapted to open when the motor exceeds a predetermined rotating speed; in such a case, however, the switch is relatively complex and unreliable, and not very precise in operation.

Alternatively, the safety switch may be actuated by a relay or the like adapted to be excited to open the switch when the signal generated by the speed transducer of the motor exceeds a predetermined value. This signal drives an electronic comparator or the like adapted to excite the relay when the signal has a value higher than that of a reference signal; this solution is therefore undesirably complex.

Furthermore, to ensure sufficient operational safety the relay must be associated with a self-holding electric circuit, which further complicates the control means and undesirably absorbs electrical energy when the relay is excited.

In any case, all the above-mentioned known solutions share the disadvantage that the motor under control is simply switched off when it receives the total supply voltage.

However, it would be favorable, and is the main object of the present invention, to provide a control means for a universal electric motor that is in a position not only to provide sufficient safety states in the case of a short-circuit in the driving circuit of the motor, but also to ensure in any case the normal function of the total control means.

Another object of the invention is to provide a control means for a universal electric motor of the stated type which is particularly simple and reliable.

According to the invention, these objects are achieved in a control means for a universal electric motor connected to an electrical power supply via a controlled switch driven by the output of a speed control circuit for modulating the voltage of the power supply in accordance with the value of a signal applied to a driving input of the control circuit. The signal is generated by a speed transducer with a value proportional to the rotating speed of the motor.

The control means is characterized in that the controlled switch and the motor have connected in series thereto at least one further controlled switch, the output of the speed control circuit being adapted to drive simultaneously the control electrodes of both the controlled switches by means of respective transformer couplings and the switches are designed as to allow for the total control means to continue functionning normally when one of the controlled switches short-circuits.

The features and advantages of the invention will become clearer from the following description, intended solely as a nonrestrictive example. Reference will be made to the adjoined drawing which shows the basic circuit diagram of a preferred embodiment of the invention.

The universal motor under control comprises a rotor 1 and a stator 2 whose windings are connected in series to heads 3 of an (e.g. alternating current) power supply via the series of a first and at least a second controlled switch 4, 5.

A speed transducer 6 is associated with rotor 1 of the motor, comprising for example a tachometric generator adapted to generate a signal whose value is proportional to the rotating speed of the motor.

The control means furthermore comprises a speed control circuit 7 having a driving input 8 to which the signal produced by tachometric generator 6 is applied. In a way known as such. control circuit 7 is adapted to compare the signal received at input 8 with a corresponding reference signal *V* whose value is proportional to the desired nominal speed of motor 1. Control circuit 7 is furthermore adapted to produce at an output 9 an error signal 16, for example of the impulsive type, resulting from the comparison.

Output 9 of control circuit 7 is adapted to drive control electrodes 10, 11 of switches 4, 5 simultaneously by means of respective transformer couplings. In particular, primary 13 of a transformer 12 is connected to output 9, while respective secondary sections 14, 15 (preferably identical to each other) are connected to respective control electrodes 10, 11 of switches 4, 5.

In a way known as such, controlled switches 4, 5 and associated means 6-15 constitute a control means adapted to modulate the supply voltage which is applied from heads 3 to universal motor 1, 2 in accordance with the value of the signal generated by speed transducer 6. In the described example, the control means is of the type that splits the phase of the a.c. voltage at heads 3 of the power supply.

In particular, the pulses of signal 16 present at output 9 of control circuit 7 are transferred via transformer 12 to control electrodes 10, 11 of controlled switches 4, 5 which are thus simultaneously triggered at moments dependent on the value of the signal generated by speed transducer 6.

One can see that when controlled switches 4, 5 are simultaneously conductive they show a virtually synchronous impedance, so that the presence of further switch 5 has no adverse effect on the function of the total control means.

On the contrary, when one of the two (or more) controlled switches 4, 5 short-circuits, the presence of the still functioning switch not only prevents the total supply voltage from being applied undesirably to motor 1, 2, but also allows for the total control means to continue functioning normally, without any substantial variation.

This is obtained also due to the transformer coupling, although known as such, between output 9 of control circuit 7 and switches 4, 5, each of which is electrically insulated from control circuit 7 even in the case of a short-circuit.

Obviously, the described control means can be modified in numerous ways falling within the scope of the invention. as defined by the claim.

For example, speed transducer 6 and/or controlled switches 4, 5 can be of a different type, as can also be the modulation of the supply voltage realized by the speed control means.

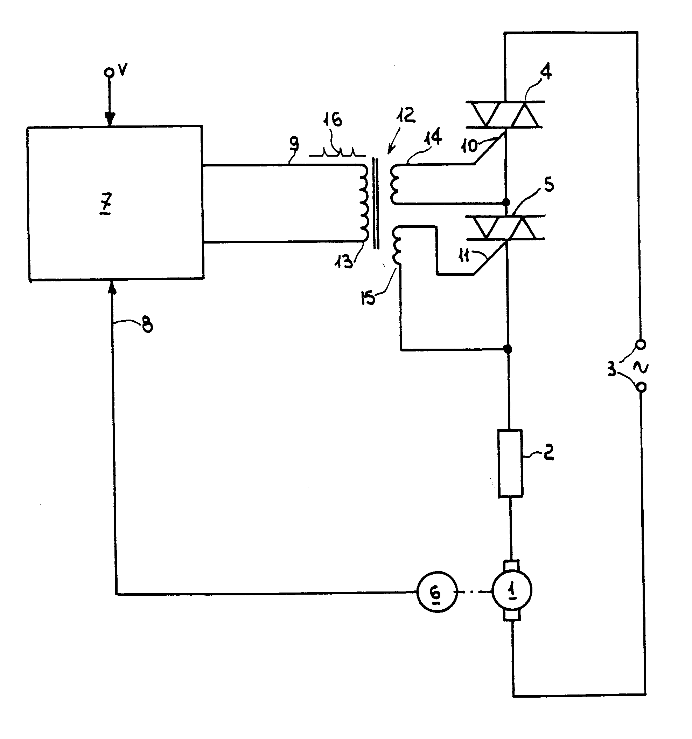

## Claims

1. A control means for a universal electric motor connected to an electrical power supply (3) via a controlled switch (4) driven by the output of a speed control circuit for modulating the voltage of the power supply (3) in accordance with the value of a signal (8) applied to a driving input of the control circuit (7), the signal (8) being generated by a speed transducer (6) with a value proportional to the rotating speed of the motor, **characterized** in that the controlled switch (4) and the motor (1, 2) have connected in series thereto at least one further controlled switch (5), the output (9) of the speed control circuit (7) being adapted to drive simultaneously the control electrodes (10, 11) of both the controlled switches (4, 5) by means of respective transformer couplings (12-15) and the switches are designed as to allow for the total control means to continue functioning normally when one of the controlled switches short-circuits.

## Patentansprüche

1. Regelvorrichtung für einen Universalmotor, der über einen Steuerschalter (4), der durch den Ausgangswert eines Drehzahlsteuerkreises zum Modulieren der Spannung der Energieversorgung (3) gemäß dem Wert eines dem Antriebseingang des Steuerkreises zugeführten Signals (8) betrieben wird, mit einer elektrischen Stromversorgung (3) verbunden ist, wobei das Signal (8) durch einen Drehzahlwandler (6) mit einem Wert, der zur Drehzahl des Motors proportional ist, erzeugt wird, **dadurch gekennzeichnet, daß** der Steuerschalter (4) und der Motor (1, 2) mit wenigstens einen weiteren Steuerschalter (5) in Reihe geschaltet sind, wobei der Ausgangswert (9) des Drehzahlsteuerkreises (7) geeignet ist, gleichzeitig die Steuerelektroden (10, 11) beider Steuerschalter (4, 5) mittels entsprechender Transformatorkopplungen (12 - 15) anzutreiben, und die Schalter sind derart ausgebildet, daß sie im Fall eines Kurzschlußes eines der Steuerschalter ein normales Funktionieren der gesamten Regelvorrichtung ermöglichen.

## Revendications

1. Moyen de commande pour un moteur électrique universel, connecté à une alimentation en courant électrique **(3)**, par l'intermédiaire d'un interrupteur commandé **(4)** piloté par la sortie d'un circuit de commande de vitesse, pour moduler la tension de l'alimentation en courant **(3)** en fonction de la valeur d'un signal **(8)** appliqué à l'entrée de pilotage du circuit de commande **(7)**, le signal **(8)** étant produit, par un transducteur de vitesse **(6)**, avec une valeur proportionnelle à la vitesse de rotation du moteur, caractérisé en ce que l'interrupteur commandé **(4)** et le moteur **(1, 2)** ont au moins un interrupteur commandé supplémentaire **(5)** qui leur est connecté en série, là sortie **(9)** du circuit de commande de vitesse **(7)** étant conçue pour piloter simultanément les électrodes de commande **(10, 11)** des deux interrupteurs commandés **(4, 5)** au moyen de couplages par transformateur respectifs **(12 à 15)** et les interrupteurs étant conçus de manière à permettre au moyen de commande global de continuer à fonctionner normalement lorsque l'un des interrupteurs commandés se met en court-circuit.
